(19) Europäisches Patentamt
European Patent Office
Office européen des brevets

(11) Veröffentlichungsnummer : **0 039 452**
**B1**

(12) # EUROPÄISCHE PATENTSCHRIFT

(45) Veröffentlichungstag der Patentschrift : **26.09.84**

(51) Int. Cl.³ : **C 08 G 63/22**, C 08 G 63/34, C 08 G 63/62

(21) Anmeldenummer : **81103080.8**

(22) Anmeldetag : **24.04.81**

(54) **Verfahren zur Herstellung aromatischer Polycarbonate.**

(30) Priorität : **07.05.80 DE 3017419**

(43) Veröffentlichungstag der Anmeldung : **11.11.81 Patentblatt 81/45**

(45) Bekanntmachung des Hinweises auf die Patenterteilung : **26.09.84 Patentblatt 84/39**

(84) Benannte Vertragsstaaten : **DE FR GB IT NL**

(56) Entgegenhaltungen :
**DE-A- 2 528 412**
**DE-A- 2 842 005**
**DE-B- 1 300 266**
**DE-B- 1 570 533**

(73) Patentinhaber : **BAYER AG**
**Konzernverwaltung RP Patentabteilung**
**D-5090 Leverkusen 1 Bayerwerk (DE)**

(72) Erfinder : **Krimm, Heinrich, Dr.**
**Heyenbaumstrasse 65**
**D-4150 Krefeld 1 (DE)**
Erfinder : **Buysch, Hans-Josef, Dr.**
**Brandenburger Strasse 28**
**D-4150 Krefeld 1 (DE)**
Erfinder : **Rudolph, Hans, Dr.**
**Haydnstrasse 9**
**D-4150 Krefeld 1 (DE)**

**EP 0 039 452 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus der DE-OS-2 736 062 (Le A 18 288) ist die Herstellung von aromatischen Kohlensäureestern durch Umesterung von Dialkylcarbonaten mit Phenolen in Gegenwart von Orgazozinnverbindungen als Umesterungskatalysatoren bekannt. Als Phenole können anstelle einwertiger Phenole auch Bisphenole verwendet werden, wobei Polycarbonate erhalten werden (Seite 5 der DT-OS).

Aus der DE-OS-2 736 063 (Le A 18 289) ist die Herstellung von aromatischen Kohlensäureestern durch Umesterung von Dimethylcarbonat mit Phenolen in Gegenwart von Umesterungskatalysatoren bekannt, wobei Gemische aus Dimethylcarbonat/Methanol und mit Methanol nicht mischbare Azeotropbildner für Methanol verwendet werden, und wobei während der Umsetzung das Methanol/Azeotropbildner-Gemisch abdestilliert wird. Als Phenole können anstelle einwertiger Phenole auch Bisphenole eingesetzt werden (Seite 3 der DT-OS), als Umesterungskatalysatoren auch organozinnverbindungen.

Aus der DE-OS-2 528 412 ist die Herstellung von aromatischen Kohlensäureestern durch Umesterung von Phenolen oder deren Acylestern mit Alkylcarbonaten oder auch cyclischen Carbonaten oder Arylalkylcarbonaten in Anwesenheit von Katalysatoren bekannt. Als Katalysatoren können neben vielen anderen Zinntetrahalogenide beziehungsweise Zinntetra-oxyverbindungen verwendet werden (Seite 2 der DE-OS). Als Phenole können auch Bisphenole eingesetzt werden, wobei polymere aromatische Carbonate erhalten werden, deren Molekulargewicht beispielsweise 17 000 beträgt.

Gegenstand der vorliegenden Erfindung ist nun die Herstellung hochmolekularer aromatischer Polycarbonate mit $\bar{M}n$ (Gewichtsmittelmolekulargewicht) von 20 000 bis 180 000, vorzugsweise von 30 000 bis 120 000, durch Umesterung von Diphenolen mit Kohlensäuredialkylestern in gegenwart von Organozinn-IV-Verbindungen, die dadurch gekennzeichnet ist, daß man die Umesterung in Gegenwart von Phenolen durchführt.

Für das erfindungsgemäße Verfahren eignen sich insbesondere Organozinn-IV-Verbindungen der allgemeinen Formel (1)

$$(R^1)_{4-x}\text{—}Sn(Y)_x \qquad (1)$$

in der

Y für einen Rest O—CO—$R^2$, OH oder $OR^2$ steht, wobei $R^2$ einen Alkylrest mit $C_1$-$C_{12}$, einen Arylrest mit $C_6$-$C_{12}$ oder einen Aralkylrest mit $C_7$-$C_{13}$ bedeutet und $R_1$ die Bedeutung von $R^2$ hat und

x eine ganze Zahl von 1-3 bedeutet,

oder Dialkylzinnoxide mit jeweils 1-12 C-Atomen im Alkylrest oder Organozinnverbindungen der allgemeinen Formel (2)

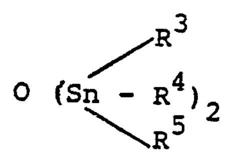

(2)

in der $R^3$ und $R^4$, gleich oder verschieden, die Bedeutung von $R^2$ haben, und $R^5$ die Bedeutung von $R^2$ hat oder für einen Rest $OR^6$ steht, in dem $R^6$ die Bedeutung von $R^2$ hat.

Für das Verfahren besonders geeignete Organozinn-IV-Verbindungen sind z. B.: Diethoxydimethylzinn, Dibutoxydimethylzinn, Diisooctoxydimethylzinn, Dimethoxydiethylzinn, Diethoxydiethylzinn, Dibutoxydiethylzinn, Diisooctoxydiethylzinn, Dimethoxydibutylzinn, Diethoxydibutylzinn, Dibutoxydibutylzinn, Diphenoxydibutylzinn, Triethoxymethylzinn, Tributoxymethylzinn, Triisooctoxymethylzinn, Trimethoxyethylzinn, Triethoxyethylzinn, Tributoxyethylzinn, Triisooctoxyethylzinn, Trimethoxybutylzinn, Triethoxybutylzinn, Tributoxybutylzinn, Triisooctoxybutylzinn, ferner Dimethylzinnoxid, Diethylzinnoxid und Dibutylzinnoxid.

Als Dialkylcarbonate werden erfindungsgemäß solche der allgemeinen Formel (3)

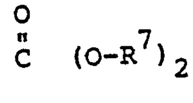

(3)

verwendet, in der $R^7$ für einen Alkylrest mit $C_1$-$C_{10}$ steht. Obwohl die Dialkylcarbonate höherer Alkohole durchaus geeignete Ausgangsstoffe der erfindungsgemäßen Reaktion darstellen, ist die Verwendung von Dimethylcarbonat oder Diethylcarbonat im Hinblick auf deren leichte Zugänglichkeit auf phosgenfreiem Wege und auf die höhere Umesterungsgeschwindigkeit bevorzugt.

Erfindungsgemäß geeignete Diphenole sind solche der Formel (4),

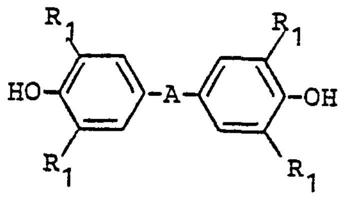

(4)

$R_1$ = H, Alkyl mit $C_1$-$C_4$ oder Cl,
A = $C_1$-$C_5$-Alkylen, $C_2$-$C_5$-Alkyliden, $C_5$-$C_6$-Cycloalkylen, $C_5$-$C_6$-Cycloalkyliden oder O oder S.

Für das Verfahren der Erfindung geeignete Diphenole sind z. B. Dihydroxydiarylalkane wie 2,2-Bis-(4-hydroxyphenyl)-propan(Bisphenol A), 2,2-Bis-(4-hydroxyphenyl)-butan, 1,1-Bis-(4-hydroxyphenyl)-cyclohexan, ferner Bis-(4-hydroxyphenyl)-ether und Bis-(4-hydroxyphenyl)-sulfid.

Erfindungsgemäß geeignete Phenole sind solche der Formel (5),

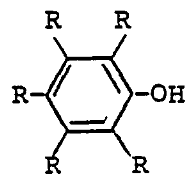

(5)

R = H oder $CH_3$, Cyclohexyl, Phenyl, Cl.

Als erfindungsgemäß zu verwendende Phenole seien genannt: Phenol, o.m.p.-Kresol, o.m.p.-Chlorphenol, o.m.p.-Ethylphenol, 2,6-Dimethylphenol, 2,4-Dimethylphenol, p-Cyclohexylphenol, p-Phenylphenol.

Die Organozinn-IV-Verbindungen werden in Konzentrationen von etwa 0,001 Gew.-% bis 10 Gew.-%, vorzugsweise von 0,01 Gew.-% bis 1 Gew.-%, bezogen jeweils auf das Gesamtgewicht der Reaktanden, verwendet.

Bevorzugt sind die Organozinn-IV-Verbindungen so zu bemessen, daß die Produkteigenschaften der Polycarbonate nicht beeinträchtigt werden, das heißt, daß im fertigen Verfahrensprodukt der Gehalt an Zinn nicht mehr als 0,5 Gew.-% beträgt.

Die Menge des erfindungsgemäß zuzusetzenden Phenols beträgt etwa 0,1 bis 10 Mol, bezogen auf 1 Mol an jeweils eingesetztem Diphenol, vorzugsweise 1-5 Mol.

Das Dialkylcarbonat wird bevorzugt im Überschuß angewendet, und zwar vorzugsweise in Mengen zwischen 1,2 und 10 Mol pro Mol an eingesetztem Diphenol. Ein Teil davon kann zweckmäßig durch Zutropfen in dem Maße in die Reaktion eingeführt werden, daß eine ausreichend hohe Reaktionstemperatur gehalten werden kann.

Die Reaktionstemperaturen liegen im Bereich von 100 bis 250 °C, bevorzugt zwischen 120 und 200 °C.

Der Druck beträgt bevorzugt 1 Atmosphäre und muß im letzten Teil des Reaktionsablaufs auf etwa 0,001 bis 50 Torr, vorzugsweise auf etwa 0,01-0,1 Torr vermindert werden.

Eine bevorzugte Verfahrensweise besteht darin, das Umesterungsgemisch an einer Kolonne von etwa 2 m Länge auf die gewünschte Reaktionstemperatur von beispeilsweise 150 °C zu bringen, was durch Regelung der Menge an Dialkylcarbonat im Reaktionsgemisch leicht möglich ist, und den Alkohol über Kopf in dem Maße, wie er im Reaktionsgut freigesetzt wird, gegebenenfalls mit Hilfe eines inerten Gasstromes oder eines Azeotropbildners für den Alkohol abzutrennen.

Sobald die auf die OH-Gruppen des Diphenols theoretisch berechnete Menge des Alkohols abgetrennt ist, wird unter vermindertem Druck der Überschuß an Dialkylcarbonat, der im Reaktionsgemisch als freies Dialkylcarbonat vorliegt oder als Phenylalkylcarbonat beziehungsweise Diphenolethylcarbonat oder in der Form von Alkylcarbonatendgruppen oligomerer Polycarbonate gebunden ist, unter laufender Erniedrigung des Druckes abdestilliert.

Schließlich wird unter stufenweiser Erhöhung der Reaktionstemperatur bis auf 270° und Erniedrigung des Druckes auf 0,1 Torr bis 0,01 Torr das gesamte eingebrachte Phenol entfernt, während das Polycarbonat durch zunehmende Zähigkeit den Übergang in den hochmolekularen Zustand anzeigt.

Nach einer anderen Verfahrensweise werden die Dialkylcarbonate durch eine Schmelze der Bisphenole mit Phenol und dem Katalysator bei der Reaktionstemperatur derart geleitet, daß ein Gemisch des betreffenden Alkohols mit Dialkylcarbonat, gegebenenfalls über eine Kolonne, abgenommen wird.

Dieses wird so lange fortgesetzt, bis die dem eingesetzten Bisphenol äquivalente Menge Alkohol abgetrennt ist. Die Entfernung des überschüssigen Dialkylcarbonats sowie des Phenols und die Überführung des Reaktionsproduktes in den hochmolekularen Zustand wird wie in der vorher beschriebenen Verfahrensweise ausgeführt.

Der Vorteil der erfindungsgemäßen Mitverwendung vom Phenol besteht darin, daß der hochmolekulare Zustand mit Sicherheit erreicht wird und darüber hinaus in wesentlich kürzerer Zeit, als es ohne Zusatz von Phenol möglich ist.

Die Verfahrensprodukte können in an sich bekannter Weise zu Folien, Platten, Überzügen und Formkörpern der verschiedensten Art verarbeitet werden.

Beispiel 1

456 g (2 Mol) Bisphenol A, 376 g (4 Mol) Phenol, 708 g (8 Mol) Diethylcarbonat und 1 g Ethylzinntriisooctylat werden unter Rühren und Überleiten von trockenem Stickstoff an einer 2,3 m hohen verspiegelten Füllkörperkolonne, beschickt mit Glasringen von 5 mm ∅, zum Rückfluß erhitzt, während über Kopf bei 78 bis 80 °C Ethanol abgenommen wird. Nach 23 h ist die Innentemperatur von anfangs 153° auf 180 °C angestiegen. Im Verlaufe von 20 h wird in der Mitte der Kolonne Diethylcarbonat in dem Maße zugetropft, daß die Reaktionstemperatur bei 180 °C gehalten wird. Dazu werden 236 g (2 mol) Diethylcarbonat benötigt. Nach 42 h Reaktionszeit kommt die Alkoholabspaltung zum Stillstand. Es sind 291 g = 6,3 Mol Ethanol abdestilliert. Die Apparatur wird an die Wasserstrahlpumpe angeschlossen. Der Druck wird bei einer Sumpftemperatur von 180 °C allmählich derart vermindert, daß die Übergangstemperatur von 100 °C nicht überschritten wird (300 Torr → 140 Torr). Nach 20 h sind 430 g eines aus Diethylcarbonat und Ethanol bestehenden Destillats abgetrennt. Der Rückstand beträgt 923 g.

50 g dieses Rückstandes werden in einem 100 ml Rundkolben mit Metallrührer unter Stickstoff zunächst bei 100 Torr auf 190 °C erhitzt, bis die Abspaltung von Phenol einsetzt. Im Laufe von 50 Min. wird die Badtemperatur auf 250 °C gebracht. Die Übergangstemperatur beträgt 121 bis 137 °C. In 30 Min. verringert man den Druck auf 14 Torr und hält hierbei 40 Min. Bei einer Badtemperatur von 200 °C beginnend und unter einem Druck von 0,03 Torr wird die Reaktion unter Steigerung der Temperatur bis auf 270 °C innerhalb von 4 h zu Ende geführt. Das Reaktionsprodukt ist dann derart zäh geworden, daß nur noch langsam gerührt werden kann.

Der Rückstand, ein helles, klares, zähes, Fäden von beträchtlicher Festigkeit ziehendes Polykondensationsprodukt, beträgt 20,7 g. Das Molekulargewicht, bestimmt nach der Lichtstreuungsmethode, liegt bei 56 000.

Beispiel 2

Durch die Schmelze von 228 g (1 Mol) Bisphenol A, 235 g (2,5 Mol) Phenol, 90 g (1 Mol) Dimethylcarbonat und 0,5 g Tributoxyethylzinn leitet man bei 170 °C Innentemperatur im Laufe von 55 h 2 000 g Dimethylcarbonat, während man über eine 70 cm Füllkörperkolonne ein aus Methanol und Dimethylcarbonat bestehendes Gemisch bei 75 bis 88 °C abdestilliert. Nachdem nach Gaschromatographie 3,4 mol Methanol abgetrennt sind, wird unter stufenweiser Verminderung des Druckes (400 → 100 Torr) zunächst bei der gleichen Innentemperatur bis schließlich 180 °C im Laufe von 3 h das überschüssige Dimethylcarbonat abdestilliert. Der Rückstand beträgt 462 g.

50 g des Rückstandes werden, wie in Beispiel 1 beschrieben, in hochmolekulares Polycarbonat übergeführt. Man erhält 20,1 g eines hellen klaren Polykondensationsproduktes mit ähnlichem Eigenschaftsbild wie in Beispiel 1. Das Molekulargewicht gemäß Lichtstreuung beträgt 39 500.

Beispiel 3

(Vergleichsbeispiel ohne Mitverwendung von Phenol gemäß DE-OS-27 36 062)

456 g (2 Mol) Bisphenol A, 118 g (1 Mol) Diethylcarbonat, 2 g Tributoxybutylzinn und 200 g Xylol werden unter Rühren und Überleiten von trockenem Stickstoff an einer 2 m hohen Füllkörperkolonne zum Rückfluß erhitzt, während über Kopf bei 78-80 °C Ethanol abgenommen wird. Im Laufe der Umsetzung werden 2 Mol Diethylcarbonat derart in der Mitte der Kolonne zugegeben, daß die Sumpftemperatur bei 168-172 °C liegt. Nach 82 Stunden sind 3,8 Mol Ethanol abgetrennt. Bei einer Innentemperatur von 175-180 °C wird Xylol, überschüssiges Diethylcarbonat und eine geringe Menge Ethanol abdestilliert, während der Druck allmählich auf 18 Torr erniedrigt wird.

50 g dieses Harzes werden, wie in Beispiel 1 beschrieben, unter stufenweiser Verminderung des Druckes auf 250°/17 Torr erhitzt, bis nach 4 h die Abspaltung flüchtiger Bestandteile beendet ist. Nach weiterem 1-stündigen Erhitzen auf 270°/0,03 Torr ist die Reaktion beendet. Man erhält 29,2 g eines hellen, klaren, fädenziehenden Polykondensationsproduktes. Das Molekulargewicht, bestimmt nach der Lichtstreuungs-Methode, beträgt 12 800.

## Ansprüche

1. Verfahren zur Herstellung von hochmolekularen Polycarbonaten mit Mw (Gewichtsmittelmolekulargewicht) von 20 000 bis 180 000 durch Umesterung von Diphenolen mit Kohlensäuredialkylestern in Gegenwart von Organozinn-IV-Verbindungen, dadurch gekennzeichnet, daß man die Umesterung in Gegenwart von Phenolen durchführt.

2. Verfahren gemäß Anspruch 1, dadurch gekennzeichnet, daß man die Umesterung in Gegenwart von 0,1 bis 10 Mol an Phenolen, bezogen auf 1 Mol an eingesetztem Diphenol, durchführt.

3. Verfahren gemäß Ansprüchen 1 und 2, dadurch gekennzeichnet, daß man die Umsetzung in Gegenwart von 1 bis 5 Mol an Phenolen, bezogen auf 1 Mol an eingesetztem Diphenol, durchführt.

## Claims

1. Process for the preparation of high molecular polycarbonates with a Mw (weight-average molecular weight) of 20,000 to 180,000 by the transesterification of diphenols with carbonic acid dialkyl esters in the presence of organo-tin-IV compounds, characterised in that the transesterification is carried out in the presence of phenols.

2. Process according to Claim 1, characterised in that the transesterification is carried out in the presence of 0.1 to 10 mols of phenols, relative to 1 mol of diphenol used.

3. Process according to Claims 1 and 2, characterised in that the reaction is carried out in the presence of 1 to 5 mols of phenols, relative to 1 mol of diphenol used.

## Revendications

1. Procédé de préparation de polycarbonates à haut poids moléculaire présentant des valeurs de Mw (poids moléculaire moyen, moyenne en poids) de 20 000 à 180 000 par transestérification de diphénols à l'aide de carbonates de dialkyle, en présence de composés d'organo-étain-IV, caractérisé en ce que l'on effectue la transestérification en présence de phénols.

2. Procédé selon la revendication 1, caractérisé en ce que l'on effectue la transestérification en présence de 0,1 à 10 moles de phénol pour 1 mole du diphénol mis en œuvre.

3. Procédé selon les revendications 1 et 2, caractérisé en ce que l'on effectue la réaction en présence de 1 à 5 moles de phénol pour 1 mole de diphénol mise en œuvre.